# EUROPEAN PATENT APPLICATION

(11) **EP 3 246 602 A1**
(43) Date of publication of application: **22.11.2017**
(21) Application number: 16737394.3
(22) Date of filing: 13.01.2016
(51) Int. Cl.: F16J 15/08

(54) **GASKET**

(30) Priority: 14.01.2015 JP 2015005423
(71) Applicant: NOK Corporation, Tokyo 105-8585 (JP)
(72) Inventor: WATANABE, Takeshi, Nihonmatsu-shi Fukushima 964-8533 (JP); TANJI, Isao, Nihonmatsu-shi Fukushima 964-8533 (JP); NAKAOKA, Shinya, Makinohara-shi Shizuoka 421-0532 (JP)
(74) Representative: Laufhütte, Dieter
(86) International application number: PCT/JP2016/050884
(87) International publication number: WO 2016/114323

(57) **Abstract**

The present invention addresses the problem of enabling an amount of compression of a bead part to be ensured and sealing properties to be improved in a gasket that is supported on one side with a bolt hole provided only on one side of the bead part. A gasket (1) is provided that has an opening (103) to be sealed, a bead part (12) provided along a circumference of the opening (103), and a bolt hole arranged on one side of the bead part (12). The gasket (1) is arranged between a case (101) and a cover (102) and is fastened with a bolt to seal the opening (103) while being supported on one side by the bolt (200). A height adjusting part (14) is provided in a side edge portion (1a) that is located on the opposite side of the bolt hole from the bead part (12). The height adjusting part (14) regulates a gap between the case (101) and the cover (102) during fastening with the bolt and serves as a fulcrum to press the cover (102) into contact with the bead part (12).

## Description

### TECHNICAL FIELD

The present invention relates to a gasket, more particularly to a gasket that is provided with a bolt hole on one side of a bead part, is arranged between flanges and is fastened with a bolt to provide sealing while being supported on one side between the flanges.

### BACKGROUND

A gasket has an opening to be sealed, formed in a metallic base material, and a bead part is formed along the circumference of the opening. When the gasket is arranged between flanges and is fastened with a bolt, this bead part is compressed between the flanges to seal the opening against, for example, internal pressure or water from outside. The bead part has functions of increasing contact pressure by forming line contact on a seal surface and also of allowing the seal surface to follow a flatness of a counter surface.

In recent years, particularly in the field of automobiles, it is essential to achieve size and weight reduction of a flange in a housing, for example, of an engine, an auxiliary device, an inverter for EV or HEV, or the like in order to improve fuel efficiency. Therefore, the need for reducing the number of bolts to fasten the flange, as well as reducing the thickness of the flange, is increasing.

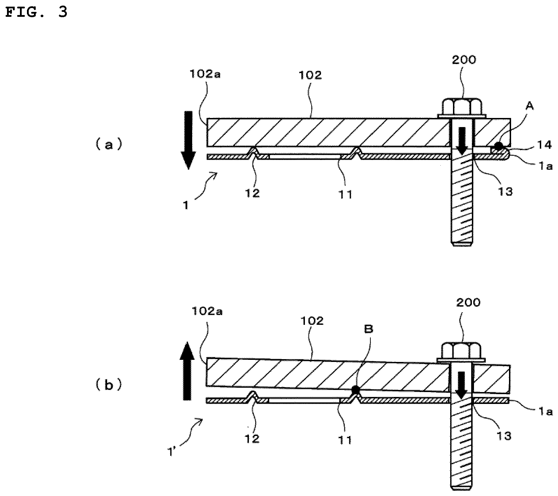

When the number of bolts is reduced, a bolt may be arranged only one side of the flange to avoid contact with others such as a housing. This case leads to a so-called overhang state in which the flange is fastened with the bolt only on one side as illustrated in Figure 3(b). The gasket used in this case is structured such that a bolt hole is arranged only on one side of an opening to be sealed. This gasket seals the opening while being supported on one side between the flanges by the bolt.

Since the gasket described above is supported on one side by the bolt, a cover of a housing is inclined downward on the bolt side during fastening with the bolt and an amount of compression of the bead part through the flange is insufficient. Therefore, there is a problem in that sealing properties are degraded. This problem becomes more remarkable as the bead part (opening) is located further away from the bolt. When a plurality of bead parts (openings) are provided, the problem becomes more remarkable in the bead part (opening) that is located further away from the bolt.

Previously, in Patent document 1, a gasket has been disclosed that has a through-hole through which a shaft of a bolt passes and a seat corresponding part which is provided around the circumference of the through-hole and corresponds to the seat of the bolt. The gasket is combined with an annular metal piece arranged on the bolt section so that the metal piece receives a fastening load of the bolt to address reduction in the fastening load due to reduction in rigidity of the flange. However, the document does not disclose the insufficiency of the amount of compression of the bead part through the flange in the overhang state described above, and thus cannot resolve the problem described above.

### PRIOR ART DOCUMENT

### PATENT DOCUMENT

Patent Document 1: JP-A-2012-219818

### SUMMARY OF THE INVENTION

### PROBLEM TO BE SOLVED BY THE INVENTION

Therefore, it is an object of the present invention is to enable an amount of compression of a bead part to be ensured and sealing properties to be improved in a gasket that is supported on one side with a bolt hole provided only on one side of the bead part.

Other problems of the present invention will be apparent from the following description.

### MEANS FOR SOLVING PROBLEM

The above-described problems are solved by the following respective inventions.

1. A gasket comprising an opening to be sealed, a bead part provided along a circumference of the opening, and a bolt hole arranged on one side of the bead part, and being arranged between a case and a cover and being fastened with a bolt to seal the opening while being supported on one side by the bolt,
   wherein a height adjusting part is provided in a side edge portion that is located on the opposite side of the bolt hole from the bead part, the height adjusting part regulating a gap between the case and the cover during fastening with the bolt and serving as a fulcrum to press the cover into contact with the bead part.
2. The gasket according to 1, wherein the height adjusting part is formed by folding the side edge portion.
3. The gasket according to 2, wherein the height adjusting part is folded so that the end edge located closest to the bead part does not overlap the bolt hole.
4. The gasket according to 2, wherein the height adjusting part is folded so that the end edge located closest to the bead part protrudes to the bolt hole by an amount of protrusion that is less than or equal to a radius of the bolt hole.
5. The gasket according to any of 1 to 4,
   wherein at least two openings, including an opening that is located closer to the bolt hole and an opening that is located further away from the bolt hole, are provided, and the bead parts are provided along respective circumferences of the openings; and
   wherein a height of the bead part located further away from the bolt hole among the bead parts is greater than a height of the bead part located closer to the bolt hole.
6. The gasket according to any of 1 to 5, wherein a height of the height adjusting part is less than or equal to a height of the lowest bead part.

### EFFECT OF THE INVENTION

According to the present invention, an amount of compression of a bead part can be ensured and sealing properties can be improved in a gasket that is supported on one side with a bolt hole provided only on one side of the bead part.

### BRIEF DESCRIPTION OF DRAWINGS

[Figure 1] Figure 1 is a plan view illustrating one embodiment of a gasket according to the present invention.
[Figure 2] Figure 2 is a sectional view of the gasket illustrated in Figure 1 cut along a line (ii) - (ii) in Figure 1 with the gasket arranged between flanges of a housing.
[Figure 3] Figure 3(a) is an explanatory drawing illustrating action of the gasket according to the present invention, and
Figure 3(b) is an explanatory drawing illustrating action of a conventional gasket.
[Figure 4] Figures 4(a) and 4(b) are side views illustrating a shape of a height adjusting part.
[Figure 5] Figure 5 is a plan view illustrating another embodiment of a gasket according to the present invention.
[Figure 6] Figure 6 is a sectional view of the gasket illustrated in Figure 5 cut along a line (vi) - (vi) in Figure 5 with the gasket arranged between flanges of a housing.
[Figure 7] Figure 7 is a side view of the gasket illustrated in Figure 5 and Figure 6.
[Figure 8] Figure 8 is a partial plan view illustrating yet another embodiment of a gasket according to the present invention.
[Figure 9] Figure 9 is a sectional view of the gasket illustrated in Figure 8 cut along a line (ix) - (ix) in Figure 8 with the gasket arranged between flanges of a housing.
[Figure 10] Figure 10 is an enlarged plan view of a part of the gasket illustrated in Figure 8 that is near a bolt hole.

### DESCRIPTION OF THE PREFERRED EMBODIMENTS

Hereinafter, embodiments of the present invention will be described with reference to the drawings.

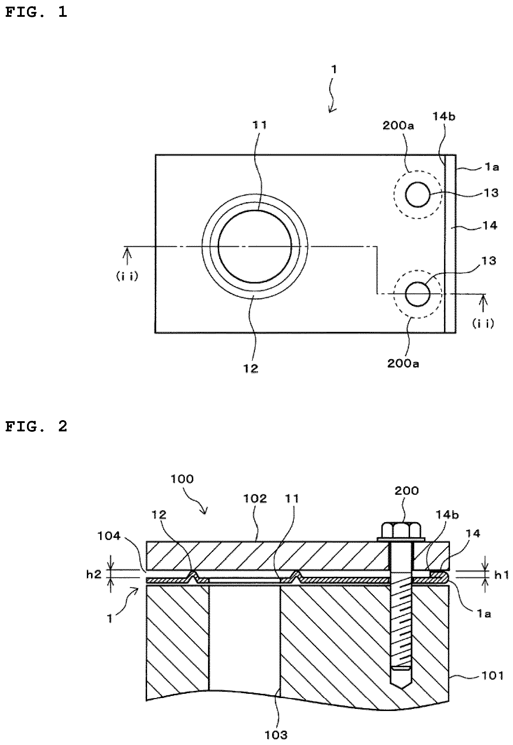

Figure 1 is a plan view illustrating one embodiment of a gasket according to the present invention, and Figure 2 is a sectional view of the gasket illustrated in Figure 1 cut along a line (ii)-(ii) in Figure 1 with the gasket arranged between flanges of a housing.

As illustrated in Figure 2, the housing 100 is composed of a case 101 and a cover 102. The case 101 has an opening 103 to be sealed. A gasket 1 is arranged between the case 101 and the cover 102 to seal the opening 103.

As shown in the Figure 1, the gasket 1 has an opening 11 to be sealed that has the same shape as the opening 103 in the case 101, and a bead part 12 that is provided along the circumference of the opening 11. The bead part 12 shown in this embodiment is formed as a full bead whose convex side faces the cover 102. However, the bead part 12 may have other bead shape like a half bead or a trapezoidal bead.

The gasket 1 is provided with the appropriate number of bolt holes 13, through each of which a bolt 200 is inserted when the gasket 1 is arranged between the case 101 and the cover 102 and is integrally fastened with the bolt 200. Although this embodiment has two bolt holes 13, the specific number of bolt holes 13 is not limited.

The gasket 1 is formed from a metallic base material, such as a stainless steel, a cold-rolled steel sheet, a galvanized steel sheet or aluminum laminated sheet. A rubber-like elastic body (not shown) is preferably adhered on the surfaces (both front and rear surfaces) of the metallic base material. The elastic close contact of the rubber-like elastic body on the surfaces with the case 101 and the cover 102 enables sealing properties to be improved. As the rubber-like elastic body, for example, a nitrile rubber, a styrene butadiene rubber, a fluororubber, an acrylic rubber or a silicone rubber may be used. For the rubber-like elastic body, one of these rubbers may be used alone, or a synthetic rubber (including an expanded rubber, a foam (formed) rubber) containing any two or more of these rubbers may be used.

The housing 100 is structured such that the case 101 and the cover 102 are fastened with the bolt 200 only on one side of the opening 103. Therefore, the bolt holes 13 of the gasket 1 are also arranged only on one side of the bead part 12 (only on the right side in Figure 1 and Figure 2). The gasket 1 is then arranged between the case 101 and the cover 102 and is integrally fastened with the bolt 200, as illustrated in Figure 2, to seal the openings 103 and 11 while being supported on one side by the bolt 200.

The gasket 1 is provided with a height adjusting part 14 in a side edge portion 1a (a right side edge portion in Figure 1 and Figure 2) that is located on the opposite side of the bolt holes 13 from the bead part 12.

The height adjusting part 14 is formed so that the side edge portion 1a is locally thicker to regulate the gap 104 between the case 101 and the cover 102 so as to correspond to the thickness of the height adjusting part 14 during fastening with the bolt 200. Consequently, the height adjusting part 14 forms a fulcrum that serves to press the cover 102 into contact with the bead part 12 of the gasket 1.

In other words, the height adjusting part 14 is formed in the side edge portion 1a of the gasket 1 to make it be locally thicker, thereby when the gasket 1 is covered with the cover 102 and is fastened with the bolt 200, the cover 102 is brought into contact with the height adjusting part 14 at about the same time as the bead part 12, as illustrated in Figure 3(a). Subsequently, as a fastening axial force of the bolt 200 is exerted to the seat surface of the bolt, the contact section of the cover 102 and the height adjusting part 14 serves as a fulcrum A, and the end 102a of the cover 102, which is located opposite side of the bolt 200 from the fulcrum A (the height adjusting part 14), is thrust downward under leverage.

In this way, the cover 102 is pressed into contact with the bead part 12 of the gasket 1, and an amount of compression of the bead part 12 is ensured. This enables the sealing properties for the openings 103 and 11 to be improved even though the gasket 1 is supported on one side by the bolt 200.

On the other hand, with a gasket 1' not having such a height adjusting part 14, when the gasket 1 is covered with the cover 102 and is fastened with the bolt 200, the cover 102 is firstly brought into contact only with the bead part 12, as illustrated in Figure 3(b). Subsequently, as a fastening axial force of the bolt 200 is exerted to the seat surface of the bolt, the contact section of the cover 102 and the bead part 12 serves as a fulcrum B, and the end 102a of the cover 102, which is located opposite side of the bolt 200 from the fulcrum B, is lifted off under leverage. Consequently, the cover 102 cannot compress the bead part 12, and sealing properties cannot be ensured. Therefore, the height adjusting part 14 provided according to the present invention has a remarkable effect in that the amount of compression of the bead part 12 can be ensured even if the gasket 1 is supported on one side.

The height h1 of the height adjusting part 14 is preferably less than or equal to the height of the lowest bead part 12. In this embodiment that has only one bead part, the height h1 of the height adjusting part 14 is preferably less than or equal to the height h2 of the bead part 12, specifically 0<h1≤h2. If the height h1 of the height adjusting part 14 is greater than the height h2 of the bead part 12, the cover 102 inclines with the height adjusting part 14 side being higher, which makes it difficult to ensure the amount of compression of the bead part 12 through the cover 102. More preferably, (0.5×h2)<h1≤h2 is satisfied.

The height adjusting part 14 may have any structure that enables the side edge portion 1a of the gasket 1 to be locally thicker. For example, another member separate from the gasket 1 may be mounted on the gasket 1 to form the height adjusting part 14. However, the height adjusting part 14 is preferably formed by folding the side edge portion 1a. In this way, since the height adjusting part 14 can be integrally formed only by folding the side edge portion 1a, the gasket 1 has a simple structure and can be manufactured at a low cost.

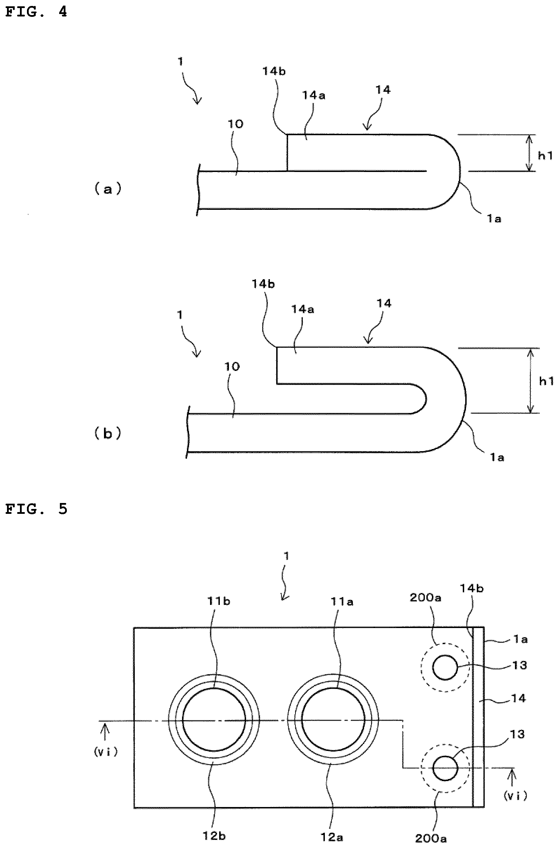

The folded height adjusting part 14 may be folded so that a folded end portion 14a is overlapped with a gasket body 10 as illustrated in Figure 4(a), or may be folded into a U-shape so that a gap is provided between the folded end portion 14a and the gasket body 10 as illustrated in Figure 4(b).

For the height adjusting part 14 in Figure 4(a), since a reaction force is unlikely generated in the height adjusting part 14 during fastening with the bolt, the stable fulcrum A can be formed and the cover 102 can be strongly pressed into contact with the bead part 12. For the height adjusting part 14 in Figure 4(b), the height h1 of the height adjusting part 14 can be greater than the thickness of the gasket body 10 and be optionally adjusted in relation to the height of the bead part 12.

Figure 1 and Figure 2 illustrate the height adjusting part 14 that is folded as described above. Here, the end edge 14b, which is located closest to the bead part 12 in the folded height adjusting part 14, is folded so as not to overlap the bolt hole 13 and so as to be arranged spaced from the bolt hole 13. Specifically, the end edge 14b of the folded height adjusting part 14 is arranged so as not to overlap the seat surface 200a of the bolt 200, as illustrated in Figure 1. In this configuration, since a force pressing the end 102a of the cover 102 downward can be increased with the height adjusting part 14 serving as a fulcrum A, a force pressing the cover 102 into contact with the bead part 12 can be increased by the fastening axial force of the bolt 200.

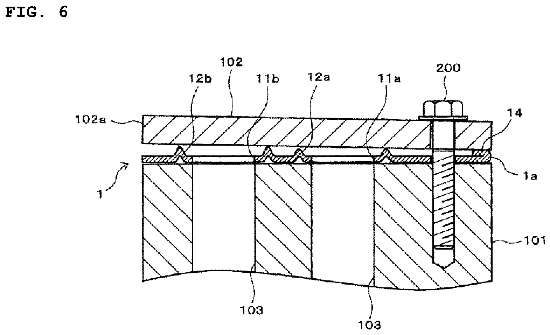

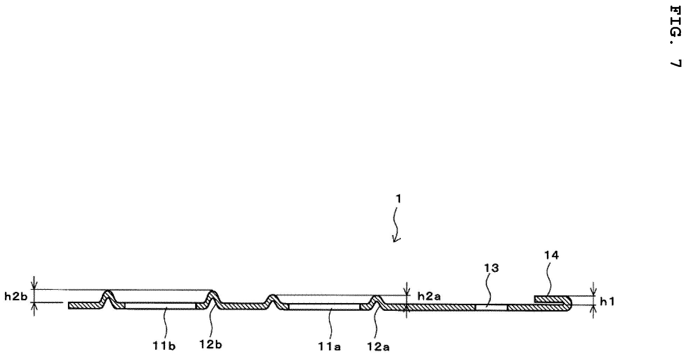

Figure 5 is a plan view illustrating another embodiment of a gasket according to the present invention, Figure 6 is a sectional view of the gasket illustrated in Figure 5 cut along a line (vi)-(vi) in Figure 5 with the gasket arranged between flanges of a housing, and Figure 7 is a side view of the gasket illustrated in Figure 5 and Figure 6. Since parts having the same reference numeral in these figures and Figure 1-Figure 4 have the same configuration, the description for Figure 1-Figure 4 is incorporated and the description for the parts is omitted.

The gasket 1 is provided with at least two openings 11; an opening 11a that is located closer to the bolt hole 13 and an opening 11b that is located further away from the bolt hole 13. The bead parts 12 are provided along respective circumferences of openings 11a and 11b, and include a bead part 12a for the opening 11a and a bead part 12b for the opening 11b.

In this case, although the height adjusting part 14 also provides an effect of ensuring the amount of compressions of respective bead parts 12a and 12b through the cover 102 during fastening with the bolt 200 as described above, this embodiment includes the bead parts 12a and 12b having different heights and illustrates a preferable aspect when there are a plurality of bead parts 12. As illustrated in Figure 7, the height h2b of the bead part 12b located further away from the bolt hole 13 is greater than the height h2a of the bead part 12a located closer to the bolt hole 13, and they are formed so as to satisfy h2a<h2b.

As the number of the openings 11 (bead parts 12) increases, the size of the cover 102 increases and the end 102a of the cover 102 is located further away from the bolt 200. As a result, during fastening with the bolt 200, a force pressing the cover 102 into contact with the bead part 12 tends to be smaller in a position closer to the end 102a of the cover 102 with the height adjusting part 14 serving as a fulcrum A as illustrated in Figure 3 (a), and this makes it more difficult to ensure the sufficient amount of compression of the bead part 12b located further away from the bolt hole 13. However, when the height h2b of the bead part 12b located further away from the bolt hole 13 is greater than the height h2a of the bead part 12a located closer to the bolt hole 13 as shown in this embodiment, the amount of compression of the bead part 12b located further away from the bolt hole 13 can be ensured, and sealing properties can be improved for all bead parts 12a and 12b.

When there exist the bead part 12a having the height of h2a and the bead part 12b having the height of h2b, the height h1 of the height adjusting part 14 is preferably less than or equal to the height h2a of the lowest bead part 12a, specifically 0<h1≤h2a. If the height h1 of the height adjusting part 14 is greater than the height h2a of the bead part 12a, it is difficult to ensure the amount of compression of the bead part 12a through the cover 102. More preferably, (0.5×h2)<h1≤h2a is satisfied.

Although the gasket 1 having two bead parts 12a and 12b is illustrated in Figure 5 and Figure 6, three or more bead parts 12 may be formed. In this case, the bead part 12 located further away from the bolt hole 13 may be formed to be higher as described above.

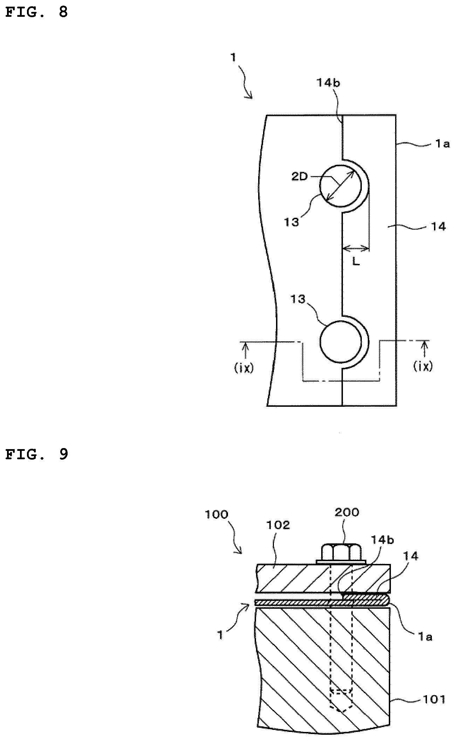

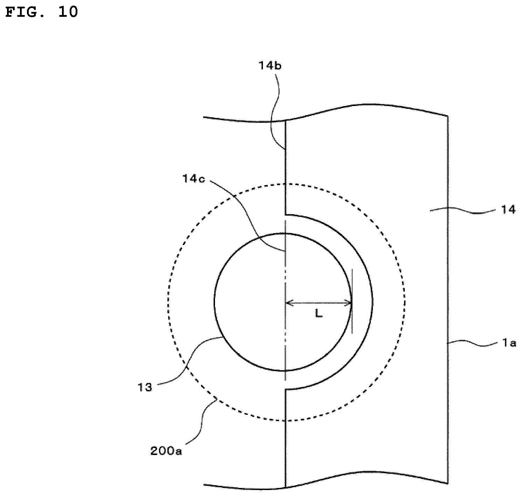

Although, in each embodiment described above, the folded height adjusting part 14 is formed so that the end edge 14b, which is located closest to the bead part 12, does not overlap the bolt hole 13, the height adjusting part 14 may be folded so that the end edge 14b protrudes to the bolt hole 13 by an amount of protrusion L that is less than or equal to the radius D of the bolt hole 12 as illustrated in Figure 8 and Figure 9. Thus, in the section where the bolt hole 13 exists, the height adjusting part 14 is cut out in a semicircular shape along the shape of the bolt hole 13, as illustrated in Figure 8. When an extension line 14c of the end edge 14b extending over the bolt hole 13 is assumed as illustrated in Figure 10, the amount of protrusion L of the end edge 14b from the inner circumference of the bolt hole 13 to the extension line 14c is defined to be less than or equal to the radius D of the bolt hole 13, i.e. to satisfy L≤D.

This enables a portion of the height adjusting part 14 to overlap the seat surface 200a of the bolt 200, therefore loss of the fastening axial force of the bolt 200 due to deflection of the cover 102 can be prevented while the force pressing the end 102a of the cover 102 downward is ensured.

Although, in each embodiment described above, the height adjusting part 14 is folded along the whole length of the side edge portion 1a, the height adjusting part 14 may be partially folded only near the bolt hole 13, for example.

### EXPLANATIONS OF LETTERS OR NUMERALS

1: gasket
   1a: side edge portion
10: gasket body
11, 11a, 11b: opening
12, 12a, 12b: bead part
13: bolt hole
14: height adjusting part
   14a: folded end portion
   14b: end edge
100: housing
   101: case
   102: cover
   102a: end
   103: opening
   104: gap
200: bolt
   200a: seat surface
A, B: fulcrum

## Claims

1. A gasket comprising an opening to be sealed, a bead part provided along a circumference of the opening, and a bolt hole arranged on one side of the bead part, and being arranged between a case and a cover and being fastened with a bolt to seal the opening while being supported on one side by the bolt,
wherein a height adjusting part is provided in a side edge portion that is located on the opposite side of the bolt hole from the bead part, the height adjusting part regulating a gap between the case and the cover during fastening with the bolt and serving as a fulcrum to press the cover into contact with the bead part.

2. The gasket according to claim 1, wherein the height adjusting part is formed by folding the side edge portion.

3. The gasket according to claim 2, wherein the height adjusting part is folded so that the end edge located closest to the bead part does not overlap the bolt hole.

4. The gasket according to claim 2, wherein the height adjusting part is folded so that the end edge located closest to the bead part protrudes to the bolt hole by an amount of protrusion that is less than or equal to a radius of the bolt hole.

5. The gasket according to any of claims 1 to 4,
wherein at least two openings, including an opening that is located closer to the bolt hole and an opening that is located further away from the bolt hole, are provided, and the bead parts are provided along respective circumferences of the openings; and
wherein a height of the bead part located further away from the bolt hole among the bead parts is greater than a height of the bead part located closer to the bolt hole.

6. The gasket according to any of claims 1 to 5, wherein a height of the height adjusting part is less than or equal to a height of the lowest bead part.
